# EUROPEAN PATENT APPLICATION

(11) **EP 2 339 713 A2**
(43) Date of publication of application: **29.06.2011**
(21) Application number: 10195039.2
(22) Date of filing: 15.12.2010
(51) Int. Cl.: H02J 3/00, H02J 3/38

(54) **System and method for providing power grid energy from a battery**

(30) Priority: 23.12.2009 US 645843
(71) Applicant: General Electric Company, Schenectady, NY 12345 (US)
(72) Inventor: Manz, Devon, Niskayuna, NY 12309 (US); Miller, Nicholas Wright, Niskayuna, NY 12309 (US); Burra, Rajni Kant, Niskayuna, NY 12309 (US); Delmerico, Robert William, Niskayuna, NY 12309 (US); Bose, Sumit, Niskayuna, NY 12309 (US); O'Brien, Kathleen Ann, Niskayuna, NY 12309 (US)
(74) Representative: Bedford, Grant Richard

(57) **Abstract**

A system (10) for providing energy and other ancillary services to a power grid (26) including a renewable energy source (16). One or more power converters (28, 35,36) are integrated with the renewable energy source (16). A battery-based energy storage system (12) is also integrated with the renewable energy source. A control system (20) including an algorithmic software operates to control at least one power converter (28,35,36) together with the battery-based energy storage system (12) to supply stored battery energy to the grid (26) when the cost of extracting the stored battery energy supplied to the grid (26) via the battery-based energy storage system (12) is less than the market price paid for the stored energy supplied by the battery-based energy storage system (12).

## Description

The invention relates generally to power grid energy and more particularly to a system and method for efficiently providing battery energy to a power grid.

The supply of electricity and the demand for electricity must be well matched in order to maintain a stable power system. The energy delivered to the system is generally determined on a day-ahead basis; and the second-to-second mismatch between supply and demand is addressed by a separate function or a separate market (if applicable). This function (and/or market) is sometimes met by functions called frequency regulation, spinning reserve and other grid ancillary services. Further, this function is required to maintain a stable system frequency.

About 1% of the power generation at every second of a day is ramping up and down to address the short term imbalance between load and generation (demand and supply). Today, this function is primarily being served by combined cycle plant and gas turbine plants that are backed down to a lower (and less efficient operating point, delivering electricity sub-optimally) to provide both ramp up and ramp down capability. In return for providing the energy at a sub-optimal efficiency, a capacity payment (if a market exists for frequency regulation) is provided to the plant for ramping up and down in response to the needs of the grid. As the penetration of renewable energy increases, the amount of generation needed to provide frequency regulation will increase.

In view of the foregoing, it would be advantageous to provide a system and method for enhancing frequency regulation of a power grid supplied by renewable energy sources. It would also be beneficial if the system and method were to provide energy to the power grid in a manner to achieve optimal profitability.

Briefly, in accordance with one embodiment of the present invention, a system for providing energy to a power grid comprises: a renewable energy source comprising one or more power converters integrated therewith; a battery-based energy storage system integrated with the renewable energy source; and a control system comprising an algorithmic software, wherein at least one power converter together with the battery-based energy storage system are directed by the control system in response to the algorithmic software to supply stored battery energy to the grid when the cost of extracting the supplied energy from the battery-based energy storage system is less than the market price paid for the supplied energy extracted from the battery-based energy storage system.

According to another embodiment, a method of providing energy to a power grid comprises: providing a renewable energy source comprising one or more power converters integrated therewith; providing a battery-based energy storage system integrated with the renewable energy source; providing a control system comprising an algorithmic software; and directing at least one power converter together with the battery-based energy storage system via the control system in response to the algorithmic software such that stored battery energy is supplied to the grid when the cost of extracting the supplied energy from the battery-based energy storage system is less than the market price paid for the supplied energy extracted from the battery-based energy storage system.

Various features, aspects, and advantages of the present invention will become better understood when the following detailed description is read with reference to the accompanying drawings in which like characters represent like parts throughout the drawings, wherein:

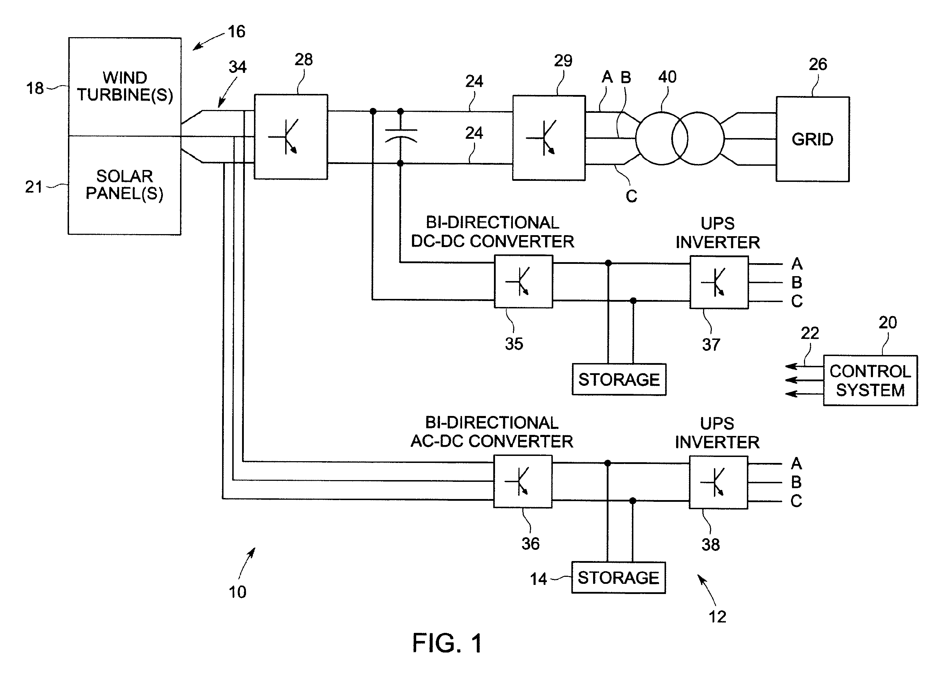

Figure 1 illustrates a renewable energy system including a plurality of controllable power converters and further including a controllable battery-based energy storage system integrated therein to supply stored battery energy to a power grid when the cost of extracting the supplied energy from the battery-based energy storage system is less than the market price paid for the supplied energy extracted from the battery-based energy storage system according to one embodiment;

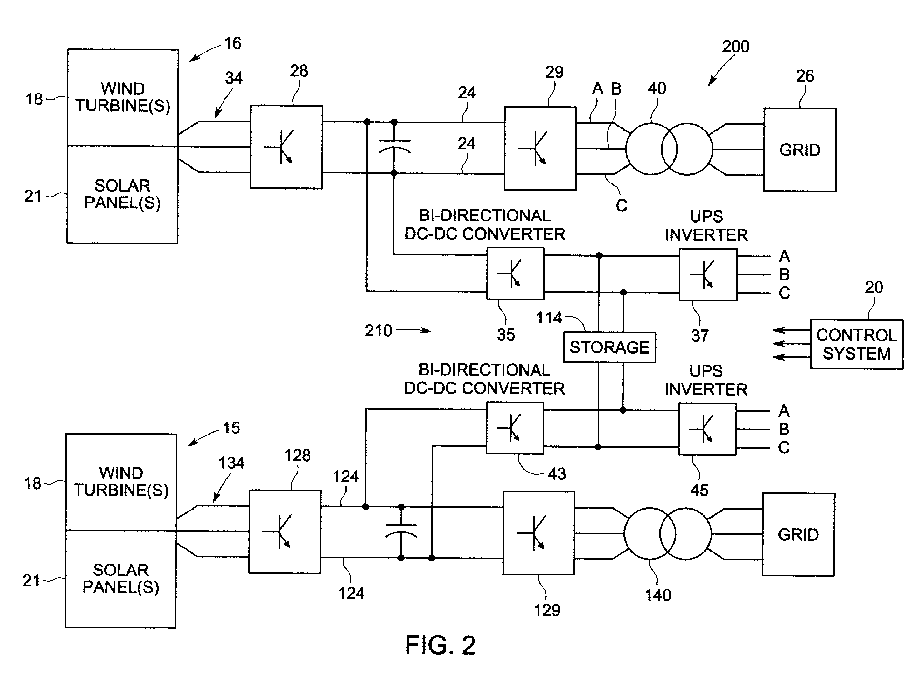

Figure 2 illustrates a plurality of renewable energy systems, each including a controllable power converter in electrical communication with a commonly shared controllable battery-based energy storage system integrated therein to supply stored battery energy to a power grid when the cost of extracting the supplied energy from the shared battery-based energy storage system is less than the market price paid for the supplied energy extracted from the shared battery-based energy storage system according to one embodiment; and

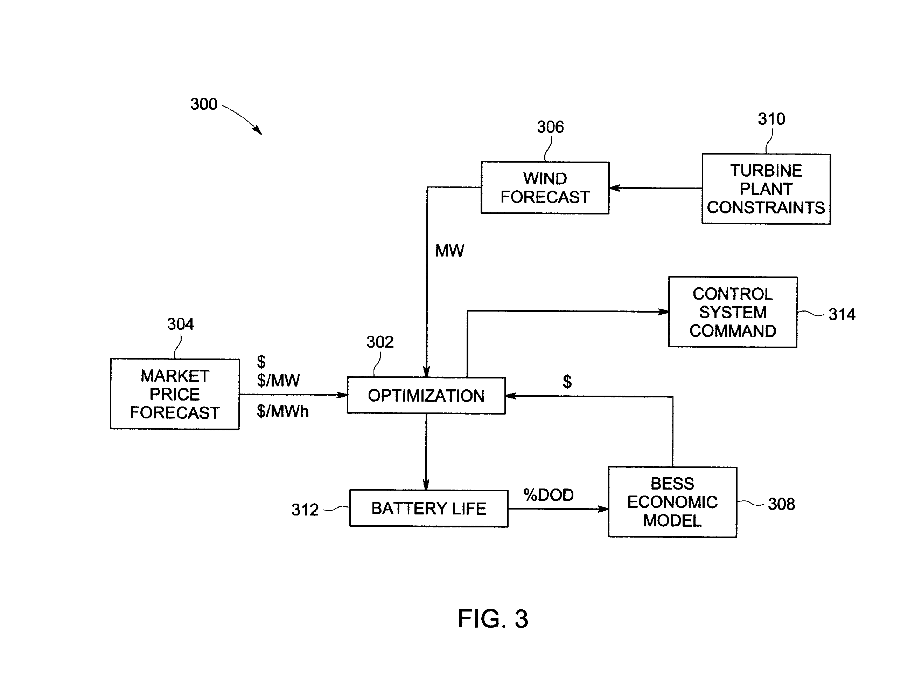

Figure 3 is a flow chart illustrating a controller algorithmic software configured for controlling a renewable energy source and a battery-based energy storage system such that stored battery energy is supplied to a power grid when the cost of extracting the supplied energy from the battery-based energy storage system is less than the market price paid for the supplied energy extracted from the battery-based energy storage system according to one embodiment of the invention.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

Figure 1 illustrates a renewable energy system 10 including a plurality of controllable power converters 28, 35, 36 and further including a controllable battery-based energy storage system 12 integrated therein to supply energy to a power grid 26 when the cost of extracting the supplied energy from the battery-based energy storage system 12 is less than the market price paid for the energy extracted from the battery-based energy storage system 12 according to one embodiment. More specifically, the system 10 for providing energy to a power grid 26 includes one or more renewable energy sources 16 that may consist of, for example, and without limitation, one or more wind turbines 18 and/or one or more solar panels 21. One or more power converters 28 are integrated with the renewable energy source(s) 16. A battery based energy storage system 12 including one or more batteries 14 also is integrated with the renewable energy source(s) 16. A control system 20 including an algorithmic software operates to control at least one power converter 28, 35, 36 together with the battery-based energy storage system 12 to supply stored battery energy to the grid 26 when the cost of extracting the supplied energy from the battery-based energy storage system 12 is less than the market price paid for the stored energy supplied by the battery-based energy storage system 12.

The renewable energy source(s) 16 according to one embodiment generates a multi-phase AC voltage 34 that is converted to a DC voltage 24 that is subsequently reconverted into an AC voltage at a desired voltage level. A transformer 40 converts the AC voltage to a desired power grid AC voltage.

As the penetration of renewable energy increases, the amount of generation needed to provide frequency regulation of the power grid 26 will increase, as stated above. The renewable energy system 10 provides the foregoing frequency regulation by supplying additional energy to power grid 26; however, this additional energy is supplied to the power grid 26 when the cost of extracting the supplied energy from the battery-based energy storage system 12 is less than the market price paid for the stored battery energy supplied to the grid 26 according to one embodiment. According to one embodiment, battery-based energy storage system 12 includes one or more batteries 14 for storing a DC charge/voltage. Each battery 14 may be charged/recharged via a corresponding bi-directional DC-DC converter 35 connected to the DC bus voltage 24 or a corresponding bi-directional AC-DC converter 36 connected to the AC bus voltage 34. Each bi-directional converter advantageously allows energy to be supplied to the grid in alternating fashion from a renewable energy source and a stored battery energy source during periods when the supply of renewable energy is variable and not satisfactorily stable.

Control system 20 operates in response to algorithmic software integrated therein and described in further detail below with reference to Figure 3. Control system 20 generates command signals that are sent out to each of the system power converters. DC-DC converter 35, for example, generates a DC voltage that is converted to an AC voltage via inverter 37; while AC-DC converter 36 generates a DC voltage that is converted to an AC voltage via inverter 38. Converter/inverter sub-system 28, 29 operates to convert the corresponding renewable energy source 16 AC output voltage 34 to a desired AC voltage at a voltage level required by the power grid 26.

Each power converter/inverter pair (28, 29), (35, 37) and (36, 38) operates in response to the command signals generated via the control system 20. When so instructed via an algorithmic software such as described below with reference to Figure 3, the battery-based energy storage system 12 will supply stored battery energy to the grid 26 when the cost of extracting the supplied energy from the battery-based energy storage system 12 is less than the market price paid for the stored battery energy extracted from the battery-based energy storage system 12. In this manner, frequency stability of the power grid 26 is enhanced during periods of insufficient wind and/or solar energy. The cost of maintaining the grid 26 is also reduced since the battery-based energy storage system 12 is utilized during periods when the cost of extracting the supplied energy from the battery-based energy storage system 12 is less than the market price paid for the stored battery energy extracted from the battery-based energy storage system 12.

Figure 2 illustrates a plurality of renewable energy systems 200, each including a controllable power converter/inverter in electrical communication with a commonly shared controllable battery-based energy storage system 210 integrated therewith to supply energy to a power grid 26 when the cost of extracting the supplied energy from the shared battery-based energy storage system 210 is less than the market price paid for the stored battery energy extracted from the shared battery-based energy storage system 210 according to one embodiment. System 200 operates in similar fashion as described above for renewable energy system 10. More specifically, the system 200 for providing energy to a power grid 26 includes a pair of renewable energy sources 15, 16 that may each consist of, for example, and without limitation, one or more wind turbines 18 and/or one or more solar panels 21. One or more power converter/inverter subsystems (28, 29), (128, 129), (35, 37), (43, 45) are integrated with the respective renewable energy sources 15, 16. A battery-based energy storage system 210 including one or more batteries 114 is also integrated with and commonly shared between the renewable energy sources 15, 16.

A control system 20 including an algorithmic software operates to control at least one power converter/inverter pair (28, 29), (128, 129), (35, 37), (43, 45) together with the battery-based energy storage system 210 to supply stored battery energy to the grid 26 when the cost of extracting the supplied energy from the shared battery-based energy storage system 210 is less than the market price paid for the stored battery energy extracted from the shared battery-based energy storage system 210 according to one embodiment.

Each renewable energy source 15, 16 in combination with its respective generator(s) or inverter(s) generates a respective multi-phase AC voltage 34, 134 that is converted to a respective DC voltage 24, 124 that is subsequently reconverted into an AC voltage at voltage level required by the corresponding power grid 26. A corresponding transformer 40, 140 converts the AC voltage to the requisite power grid AC voltage.

As the penetration of renewable energy increases, the amount of generation needed to provide frequency regulation of the power grid 26 will increase, as stated above. The renewable energy system 200 provides the foregoing frequency regulation by supplying energy to power grid 26 during periods when the cost of extracting the supplied energy from the battery-based energy storage system 210 is less than the market price paid for the stored battery energy supplied by the battery-based energy storage system 210 to the grid 26 according to one embodiment. According to one embodiment, battery-based energy storage system 210 includes one or more batteries 114 for storing a DC charge/voltage. Each battery 114 may be charged/recharged via a corresponding bi-directional DC-DC converter 35, 43 connected to a respective DC bus voltage 24, 124.

Control system 20 operates in response to algorithmic software integrated therein and described in greater detail below with reference to Figure 3. Control system 20 generates command signals that are sent out to each of the system power converters 28, 128, 35, 43 and their respective inverters 29, 129, 37, 45. DC-DC converter 35, for example, generates a DC voltage that is converted to an AC voltage via inverter 37; while DC-DC converter 43 generates a DC voltage that is converted to an AC voltage via inverter 45. Each of converter/inverter sub-systems 28, 128 operates to convert a corresponding renewable energy source 15, 16 AC output voltage 34, 134 to a desired AC voltage at a different voltage level.

Each power converter/inverter pair (28, 29), (128, 129), (35, 37) and (43, 45) operates in response to the command signals generated via the control system 20. When so instructed via an algorithmic software such as described below with reference to Figure 3, the battery-based energy storage system 210 will supply stored battery energy to the grid 26 when the cost of extracting the supplied energy from the battery-based energy storage system 210 is less than the market price paid for the stored battery energy supplied by the battery-based energy storage system 210. Applications are not so limited however, and it shall be understood that other embodiments may be configured to also supply stored battery energy to the grid even when the cost of the stored battery energy supplied to the grid is not less than the market price paid for the stored battery energy supplied by the battery-based energy storage system 210. In this manner, frequency stability of the power grid 26 may be enhanced during periods of insufficient wind and/or solar energy. The cost of maintaining the grid 26 is also reduced when the battery-based energy storage system 210 is utilized during periods when the cost of extracting the supplied energy from the battery-based energy storage system 210 is less than the market price paid for the stored battery energy supplied by the battery-based energy storage system 210.

Figure 3 is a flow chart illustrating a control system algorithmic software 300 configured for controlling both a renewable energy source 15, 16 and a battery-based energy storage system 12, 210 such that the renewable energy source(s) 15, 16 and the battery-based energy storage system(s) 12, 210 together operate to supply stored battery energy to the grid 26 when the cost of extracting the supplied energy from the battery-based energy storage system 12, 210 is less than the market price paid for the stored battery energy supplied to the grid by the battery-based energy storage system 12,210.

Algorithmic software 300 includes an optimization algorithm 302 that determines control system 20 command signals 314 based upon market price forecast data 304, renewable energy forecast data 306 such as wind forecast data, and battery energy storage system (BESS) economic and performance data 308 according to one embodiment. The market price forecast data 304 is based on previous market data provided via a third party according to one embodiment. The wind forecast data 306 is based upon turbine plant constraints such as estimated available wind turbine inverter capacity 310 based on wind power forecast data according to one embodiment. The BESS economic data 308 is based on 1) battery life data 312 that determines battery percent depth of discharge required for meeting particular energy demands of the power grid according to one embodiment, 2) the market price forecast data 304, and 3) battery replacement/recharge time based on the estimated available wind turbine inverter capacity. More particularly, the BESS economic data 308 determines the cost of using the battery-based energy storage system 12, 210 to supply energy to the grid 26.

The optimization algorithm 302 then compares the market price forecast data 304 with the cost of extracting the stored battery energy supplied to the power grid 26 via the battery-based energy storage system 210 as determined from the BESS economic model 308 and makes a determination as to whether the cost of extracting the supplied energy from the battery-based energy storage system 12, 210 is less than the market price paid for the supplied energy.

Control system commands 314 are then generated and communicated to the renewable energy source power converter(s)/inverter(s), and each corresponding battery-based energy storage system 12, 210 power convert/inverter to control whether energy is supplied to the power grid 26 via a renewable energy source or a battery-based energy storage system. A renewable energy source 15, 16 may be used when available, even during periods when stored battery energy is available, in certain applications if the cost of extracting the supplied energy from the battery-based energy storage system 12, 210 is greater than the market price paid for stored battery energy.

The cost of using stored battery energy is dependent upon the depth of battery discharge required to supply the energy to the grid, because the battery(s) then need to be recharged via a renewable energy source or the grid itself to replace the energy extracted from the battery(s) and thus restore the battery(s) to their full potential. If the cost to recharge the battery(s) is greater than the cost of discharging the battery(s), then a cost benefit is not achieved, and stored battery energy will not be extracted from the battery-based energy storage system 12, 210.

In summary explanation, a system embodiment has been described for providing energy to a power grid. The embodiment includes at least one renewable energy source and one or more power converters integrated therewith. A battery-based energy storage system is also integrated with the renewable energy source. A control system includes an algorithmic software such that at least one power converter together with the battery-based energy storage system are directed by the control system in response to the algorithmic software to supply stored battery energy to the grid when the cost of extracting the supplied energy from the battery-based energy storage system is less than the market price paid for the supplied energy extracted from the battery-based energy storage system.

The embodied methodologies described herein estimate the optimal amount of energy to dispatch from a battery-based energy storage device/system based on the opportunity cost of providing energy, regulation response or both. Since the energy storage device/system can share an inverter with a renewable energy source such as a wind turbine, there is a decision that needs to be made about whether the combined system should provide energy from a battery or from the wind rotor according to one embodiment. Factors of consideration include 1) information about the impact of a single charge and discharge cycle on the life of the storage device/system and a comparison of this impact to the perceived benefit of offering this additional energy in the form of regulation service to a power system/grid from the storage device/system; 2) information about near-future (day ahead to hour ahead) energy and ancillary prices to quantify the value of providing energy at the expense of ancillary services or vice versa and/or information about the opportunity cost of other generation providing ancillary services compared to the cost of energy storage providing this service; and 3) information about the forecasted wind power which can be refined and incorporated into an updated forecast as the timeframe is approached to quantify the value of providing energy at the expense of ancillary services or vice versa.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A system for providing energy to a power grid, the system comprising:
   a renewable energy source;
   one or more power converters;
   a battery-based energy storage system; and
   a control system comprising an algorithmic software, wherein at least one power converter together with the battery-based energy storage system are directed by the control system in response to the algorithmic software to supply stored battery energy to the grid when the cost extracting the supplied energy from the battery-based energy storage system is less than the market price paid for the stored energy supplied by the battery-based energy storage system.
2. The system according to clause 1, wherein the renewable energy source is selected from at least one or more wind energy sources and one or more solar energy sources.
3. The system according to any preceding clause, wherein the algorithmic software operates in response to market price forecast data, renewable energy source forecast data and battery-based energy storage system economic data causing the control system to generate power converter signals directing operation of both the renewable energy source and the battery-based energy storage system.
4. The system according to any preceding clause, wherein the market price forecast data is based on previous market data provided by a third party.
5. The system according to any preceding clause, wherein the renewable energy source forecast data is estimated available wind turbine capacity data based on wind power forecast data.
6. The system according to any preceding clause, wherein the renewable energy source forecast data is estimated available solar inverter capacity data based on solar power forecast data.
7. The system according to any preceding clause, wherein the renewable energy source forecast data is estimated available wind turbine capacity data based on wind power forecast data and estimated available solar inverter capacity data based on solar power forecast data.
8. The system according to any preceding clause, wherein the battery-based energy storage system economic data is based on depth of battery discharge data required in response to the market price forecast data and the renewable energy source forecast data.
9. The system according to any preceding clause, wherein the depth of battery discharge data is based on a battery life cycle model.
10. The system according to any preceding clause, wherein the battery life cycle model is based on battery historical trends and battery historical performance data.
11. A method of providing energy to a power grid, the method comprising:
   providing a renewable energy source, one or more power converters, a battery-based energy storage system, and a control system comprising an algorithmic software; and
   directing at least one power converter together with the battery-based energy storage system via the control system in response to the algorithmic software such that stored battery energy is supplied to the grid when the cost of extracting the stored battery energy supplied to the grid via the battery-based energy storage system is less than the market price paid for the stored energy supplied by the battery-based energy storage system.
12. The method according to any preceding clause, wherein providing a renewable energy source comprises providing at least one energy source selected from a group consisting of at least one or more wind energy sources and one or more solar energy sources.
13. The method according to any preceding clause, wherein directing at least one power converter together with the battery-based energy storage system via the control system in response to the algorithmic software comprises directing at least one power converter together with the battery-based energy storage system via the control system in response to market price forecast data, renewable energy source forecast data and battery-based energy storage system economic data such that the control system generates power converter signals directing operation of both the renewable energy source and the battery-based energy storage system.
14. The method according to any preceding clause, wherein directing at least one power converter together with the battery-based energy storage system via the control system in response to market price forecast data comprises directing at least one power converter together with the battery-based energy storage system via the control system in response to previous market data provided by a third party.
15. The method according to any preceding clause, wherein directing at least one power converter together with the battery-based energy storage system via the control system in response to renewable energy source forecast data comprises directing at least one power converter together with the battery-based energy storage system via the control system in response to estimated available wind turbine capacity data based on wind power forecast data.
16. The method according to any preceding clause, wherein directing at least one power converter together with the battery-based energy storage system via the control system in response to renewable energy source forecast data comprises directing at least one power converter together with the battery-based energy storage system via the control system in response to estimated available solar inverter capacity data based on solar power forecast data.
17. The method according to any preceding clause, wherein directing at least one power converter together with the battery-based energy storage system via the control system in response to renewable energy source forecast data comprises directing at least one power converter together with the battery-based energy storage system via the control system in response to estimated available wind turbine capacity data based on wind power forecast data and further in response to estimated available solar inverter capacity data based on solar power forecast data.
18. The method according to any preceding clause, wherein directing at least one power converter together with the battery-based energy storage system via the control system in response to battery-based energy storage system economic data comprises directing at least one power converter together with the battery-based energy storage system via the control system in response to depth of battery discharge data required in response to the market price forecast data and the renewable energy source forecast data.
19. The method according to any preceding clause, wherein directing at least one power converter together with the battery-based energy storage system via the control system in response to depth of battery discharge data required in response to the market price forecast data and the renewable energy source forecast data comprises directing at least one power converter together with the battery-based energy storage system via the control system in response to a battery life cycle model.
20. The method according to any preceding clause, wherein directing at least one power converter together with the battery-based energy storage system via the control system in response to a battery life cycle model comprises directing at least one power converter together with the battery-based energy storage system via the control system in response to battery historical trends and battery historical performance data.

## Claims

1. A system (10) for providing energy to a power grid (26), the system comprising:
a renewable energy source (16);
one or more power converters (28), (35), (36);
a battery-based energy storage system (12); and
a control system (20) comprising an algorithmic software, wherein at least one power converter (28), (35), (36) together with the battery-based energy storage system (12) are directed by the control system (20) in response to the algorithmic software to supply stored battery energy to the grid (26) when the cost extracting the supplied energy from the battery-based energy storage system (12) is less than the market price paid for the stored energy supplied by the battery-based energy storage system (12).

2. The system (10) according to claim 1, wherein the renewable energy source (16) is selected from at least one or more wind energy sources (18) and one or more solar energy sources (21).

3. The system (10) according to any preceding claim, wherein the algorithmic software operates in response to market price forecast data, renewable energy source forecast data and battery-based energy storage system economic data causing the control system (20) to generate power converter signals directing operation of both the renewable energy source (16) and the battery-based energy storage system (12).

4. The system (10) according to any preceding claim, wherein the market price forecast data is based on previous market data provided by a third party.

5. The system (10) according to any preceding claim, wherein the renewable energy source forecast data is estimated available wind turbine capacity data based on wind power forecast data.

6. The system (10) according to any preceding claim, wherein the renewable energy source forecast data is estimated available solar inverter capacity data based on solar power forecast data.

7. The system (10) according to any preceding claim, wherein the renewable energy source forecast data is estimated available wind turbine capacity data based on wind power forecast data and estimated available solar inverter capacity data based on solar power forecast data.

8. The system (10) according to any preceding claim, wherein the battery-based energy storage system economic data is based on depth of battery discharge data required in response to the market price forecast data and the renewable energy source forecast data.

9. The system (10) according to any preceding claim, wherein the depth of battery discharge data is based on a battery life cycle model.

10. The system (10) according to any preceding claim, wherein the battery life cycle model is based on battery historical trends and battery historical performance data.
